# EUROPÄISCHE PATENTSCHRIFT

(11) **EP 2 208 875 B1**
(45) Veröffentlichungstag und Bekanntmachung des Hinweises auf die Patenterteilung: **26.10.2011**
(21) Anmeldenummer: 09178064.3
(22) Anmeldetag: 04.12.2009
(51) Int. Cl.: F02B 29/08, F02D 9/10, F02B 27/02, F01L 1/44

(54) **Ventileinrichtung und Brennkraftmaschinensystem**
Valve device and internal combustion engine system
Dispositif de soupape et moteur à combustion interne.

(30) Priorität: 18.12.2008 DE 102008063604
(43) Veröffentlichungstag der Anmeldung: 21.07.2010
(73) Patentinhaber: Mahle International GmbH, 70376 Stuttgart (DE)
(72) Erfinder: Elsässer, Alfred, 75210 Keltern (DE); Genieser, Patric, 70191 Stuttgart (DE); Türpe, Dietmar, 98693 Ilmenau (DE); Löffler, Michael, 99334 Elleben (DE)
(74) Vertreter: Bernhard, Uwe

(56) Entgegenhaltungen:
- EP-A1- 0 262 883
- EP-A1- 0 306 769
- DE-A1- 4 414 849
- GB-A- 191 204 168
- JP-A- 8 144 791

## Beschreibung

Die vorliegende Erfindung betrifft eine Ventileinrichtung zum Steuern einer Gasströmung in einer Frischluftanlage einer Brennkraftmaschine, insbesondere eines Kraftfahrzeugs. Die Erfindung betrifft außerdem ein Brennkraftmaschinensystem für ein Kraftfahrzeug, das zumindest eine derartige Ventileinrichtung aufweist.

Aus der DE 10 2006 037 934 A1 ist ein Brennkraftmaschinensystem bekannt, das eine mehrere Zylinder und darin hubverstellbare Kolben aufweisende Brennkraftmaschine, eine Frischluftanlage zum Zuführen von Frischluft zu den Zylindern der Brennkraftmaschine, eine Abgasanlage zum Abführen von Abgas von den Zylindern der Brennkraftmaschine sowie eine Abgasrückführanlage zum Rückführen von Abgas von der Abgasanlage zur Frischluftanlage umfasst. Zum Verbessern der Abgasrückführung ist beim bekannten Brennkraftmaschinensystem in der Frischluftanlage zumindest eine Ventileinrichtung zum Steuern eines Strömungsquerschnitts in der Frischluftanlage angeordnet, und zwar bezüglich der Frischluftströmung stromauf von Einlassventilen der Zylinder. Die jeweilige Ventileinrichtung wird dabei so angesteuert bzw. so betrieben, dass sie während eines Einlassvorgangs eines der Zylinder den Strömungsquerschnitt der Frischluftanlage erst zeitlich nach dem Einlassbeginn öffnet. Hierdurch kann ein durch die Kolbenbewegung im Zylinder erzeugter Unterdruck zum Verbessern der Abgasrückführung genutzt werden. Die Ventileinrichtung kann beim bekannten Brennkraftmaschinensystem eine kontinuierlich rotierend angetriebene Klappe aufweisen, die beispielsweise synchron zu einer Kurbelwelle der Brennkraftmaschine rotiert.

Mit Hilfe derartiger Ventileinrichtungen ist es insbesondere möglich, Druckschwingungen in der Frischluftanlage, die aufgrund von Ladungswechselvorgängen ohnehin vorhanden sind, zu verstärken bzw. um derartige Druckschwingungen zu erzeugen. Negative Amplituden dieser Druckschwingungen lassen sich zum Einstellen einer Abgasrückführrate, also zumindest zum Verändern der Abgasrückführrate, verwenden.

Eine Ventileinrichtung gemäß dem Oberbegriff des Anspruchs 1 ist aus DE 4 414 849 A und EP 0 262 883 A bekannt.

Theoretisch ist denkbar, dass eine derartige Ventileinrichtung während ihres Betriebs eine Fehlfunktion aufweisen kann oder sogar ausfallen kann. Beispielsweise kann der Klappenantrieb ausfallen. Die Klappe kann in einer Position stehen bleiben oder verklemmen, in der die Klappe den durchströmbaren Querschnitt des Kanalabschnitts zu einem großen Teil verschließt oder sogar vollständig sperrt. In der Folge ist die Frischluftversorgung der Brennkraftmaschine stark gefährdet, wodurch diese nicht mehr ordnungsgemäß betrieben werden kann oder sogar ausfallen kann.

Die vorliegende Erfindung beschäftigt sich mit dem Problem, für eine Ventileinrichtung bzw. für ein damit ausgestattetes Brennkraftmaschinensystem eine verbesserte Ausführungsform anzugeben, die sich insbesondere dadurch auszeichnet, dass im Falle einer Fehlfunktion der Ventileinrichtung ein Betrieb der Brennkraftmaschine weiterhin möglich ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, im Kanalabschnitt einen Drehrahmen anzuordnen, der mit Hilfe eines Rahmenantriebs koaxial zur Rotationsachse verstellbar ist und der eine Rahmenöffnung aufweist, deren durchströmbarer Querschnitt durch die Klappe steuerbar ist. Drehrahmen und Rahmenantrieb sind dabei so aufeinander abgestimmt, dass der Rahmenantrieb den Drehrahmen von einer Ausgangsstellung in eine Notstellung überführen kann. In der Ausgangsstellung bildet die Rahmenöffnung des Drehrahmens den durchströmbaren Querschnitt des Kanalabschnitts. Im Unterschied dazu wird in der Notstellung zumindest ein Bypasspfad geöffnet, so dass der durchströmbare Querschnitt des Kanalabschnitts in der Notstellung zumindest diesen einen Bypasspfad umfasst bzw. aufweist, der den Drehrahmen umgeht. Auf diese Weise wird mit Hilfe des wenigstens einen Bypasspfads eine hinreichende Durchströmbarkeit der Ventileinrichtung erzielt, auch dann, wenn die Rahmenöffnung des Drehrahmens durch eine ungünstige Klappenstellung verschlossen ist. Somit kann für einen Notbetrieb eine ausreichende Frischluftversorgung der Brennkraftmaschine realisiert werden, so dass die Brennkraftmaschine grundsätzlich betrieben werden kann. Die dabei realisierbaren Abgasrückführraten können von optimalen Werten abweichen, was jedoch für diesen Notbetrieb in Kauf genommen werden kann.

Bemerkenswert ist an dieser Stelle außerdem, dass diese Notbetriebsfunktion in die Ventileinrichtung integriert ist, so dass aufwendige Maßnahmen zur Realisierung der gleichen Funktionalität an der Frischluftanlage entfallen können. Denkbar ist bspw. ein aufwändiger die Ventileinrichtung umgehender Bypass, der bei einem Ausfall der Ventileinrichtung aktiviert werden könnte.

Entsprechend einer vorteilhaften Ausführungsform können in der Notstellung zwei parallel durchströmbare Bypasspfade geöffnet sein, die den Drehrahmen beiderseits der Drehachse umgehen. Hierdurch vereinfacht sich der Aufbau, wobei gleichzeitig ein vergleichsweise großer durchströmbarer Querschnitt für den Notbetrieb im Kanalabschnitt geöffnet werden kann. Besonders zweckmäßig ist es dabei, die Klappe und den Drehrahmen so aufeinander abzustimmen, dass die Drehachse des Drehrahmens koaxial zur Rotationsachse der Klappe verläuft. Dies führt zu einer besonders kompakten Bauweise.

Entsprechend einer vorteilhaften Ausführungsform kann der Rahmenantrieb ausfallsicher ausgelegt sein, so dass er bei einer Fehlfunktion der Klappe den Drehrahmen selbsttätig in die Notstellung überführt. Diese Fail-Safe-Auslegung ermöglicht eine automatische Überführung des Drehrahmens in die Notstellung und somit eine automatische Bereitstellung eines ausreichend dimensionierten durchströmbaren Querschnitts im Kanalabschnitt, wenn die Klappe nicht mehr ordnungsgemäß arbeitet, was durch die Klappe selbst oder durch deren Klappenantrieb verursacht sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, schaltplanartige Prinzipdarstellung eines Brennkraftmaschinensystems,
- Fig. 2: eine Ansicht wie in Fig. 1, jedoch bei einer anderen Ausführungsform,
- Fig. 3: eine perspektivische Ansicht einer Ventileinrichtung,
- Fig. 4: eine Ansicht wie in Fig. 3, jedoch bei einer anderen Ausführungsform,
- Fig. 5: eine Ansicht wie in Fig. 3, jedoch bei einer weiteren Ausführungsform,
- Fig. 6a - 6d: jeweils einen stark vereinfachten Längsschnitt durch eine Ventileinrichtung bei verschiedenen Betriebszuständen,
- Fig. 7 bis 10: jeweils eine stark vereinfachte, schaltplanartige Darstellung der Ventileinrichtung mit unterschiedlichen Ausführungsformen eines Rahmenantriebs.

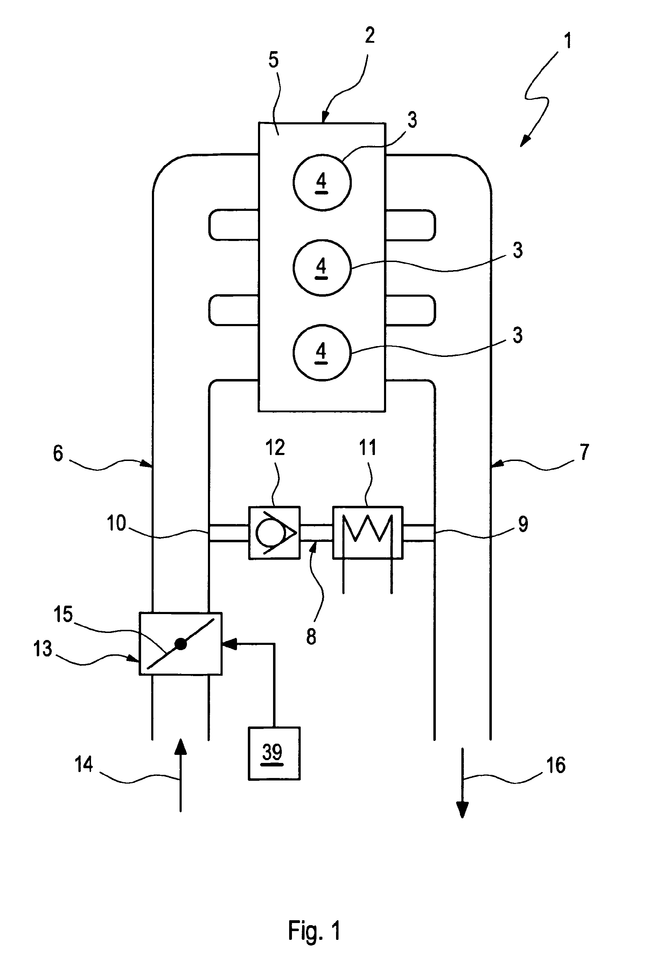

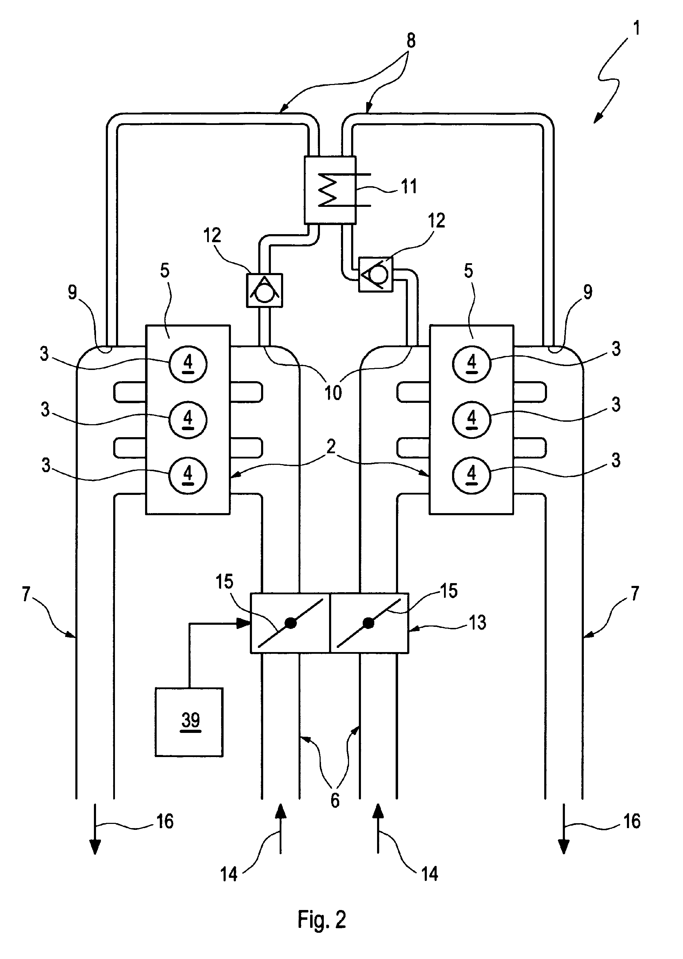

Entsprechend den Fig. 1 und 2 umfasst ein Brennkraftmaschinensystem 1, das zum Beispiel in einem Kraftfahrzeug zur Anwendung kommen kann, eine Brennkraftmaschine 2, die mehrere Zylinder 3 sowie in den Zylindern hubverstellbare Kolben 4 aufweist. Bei der in Fig. 1 gezeigten Ausführungsform umfasst die Brennkraftmaschine 2 eine einzige Zylinderbank 5, die alle Zylinder 3 enthält. Im Beispiel der Fig. 2 weist die Brennkraftmaschine 2 zwei derartige Zylinderbänke 5 auf, die jeweils mehrere, üblicherweise die Hälfte der Zylinder 3 enthalten.

Das Brennkraftmaschinensystem 1 umfasst ferner eine Frischluftanlage 6, eine Abgasanlage 7 sowie eine Abgasrückführanlage 8. Die Frischluftanlage 6 führt im Betrieb der Brennkraftmaschine 2 den Zylindern 3 Frischluft zu. Die Abgasanlage 7 führt im Betrieb der Brennkraftmaschine 2 Abgas von den Zylindern 3 ab. Die Abgasrückführanlage 8 dient zum Rückführen von Abgas von der Abgasanlage 7 zur Frischluftanlage 6. Hierzu verbindet die Abgasrückführanlage 8 zumindest eine abgasseitige Entnahmestelle 9 mit zumindest einer frischluftseitigen Einleitstelle 10. Die Abgasrückführanlage 8 kann einen Abgasrückführkühler 11 sowie optional zumindest ein Rückschlagsperrventil 12 enthalten, das ein Überführen von Frischluft zur Abgasseite verhindert.

Das Brennkraftmaschinensystem 1 ist bei den hier gezeigten Ausführungsformen außerdem mit zumindest einer Ventileinrichtung 13 ausgestattet. Diese ist in der Frischluftanlage 6 bezüglich einer durch einen Pfeil 14 angedeuteten Frischluftströmung stromauf von hier nicht eingezeichneten Einlassventilen der Zylinder 3 angeordnet. Mit Hilfe der Ventileinrichtung 13 kann eine Abgasrückführrate der Abgasrückführanlage 8 variiert bzw. eingestellt werden. Die Ventileinrichtung 13 arbeitet hierbei mit zumindest einer Klappe 15, die in den Fig. 1 und 2 stark vereinfacht dargestellt ist. Bei der in Fig. 2 gezeigten Ausführungsform weist die Ventileinrichtung 13 zwei derartige Klappen 15 auf, die jeweils einem Strang der hier zweiflutig ausgestalteten Frischluftanlage 6 zugeordnet sind, welche die beiden Zylinderbänke 5 bzw. deren Zylinder 3 separat mit Frischluft versorgen. Ebenso ist eine Ausführungsform denkbar, bei der zwei Ventileinrichtungen 13 zum Einsatz kommen, die jeweils mit einer Klappe 15 arbeiten. In den Fig. 1 und 2 ist mit 16 eine Abgasströmung bezeichnet, die durch einen entsprechenden Pfeil angedeutet ist.

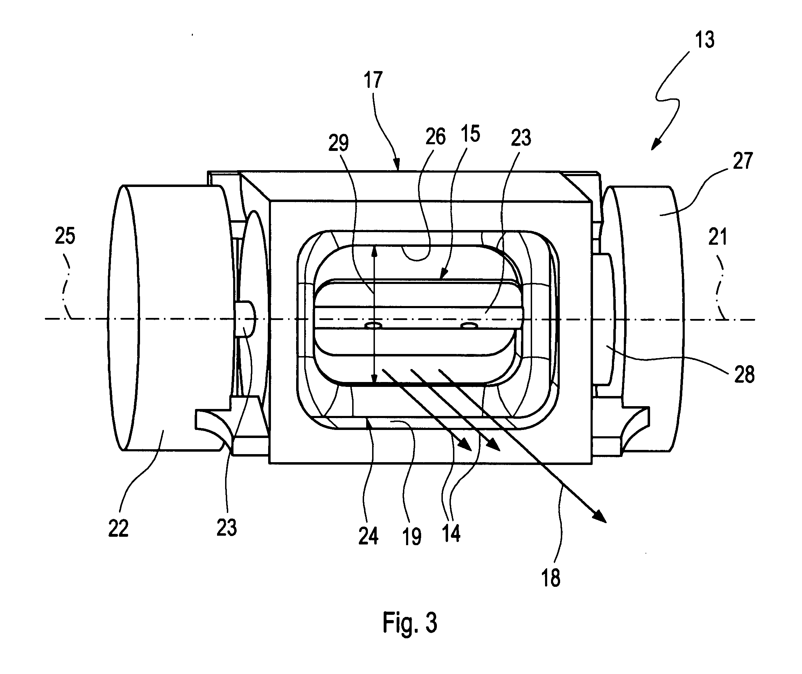

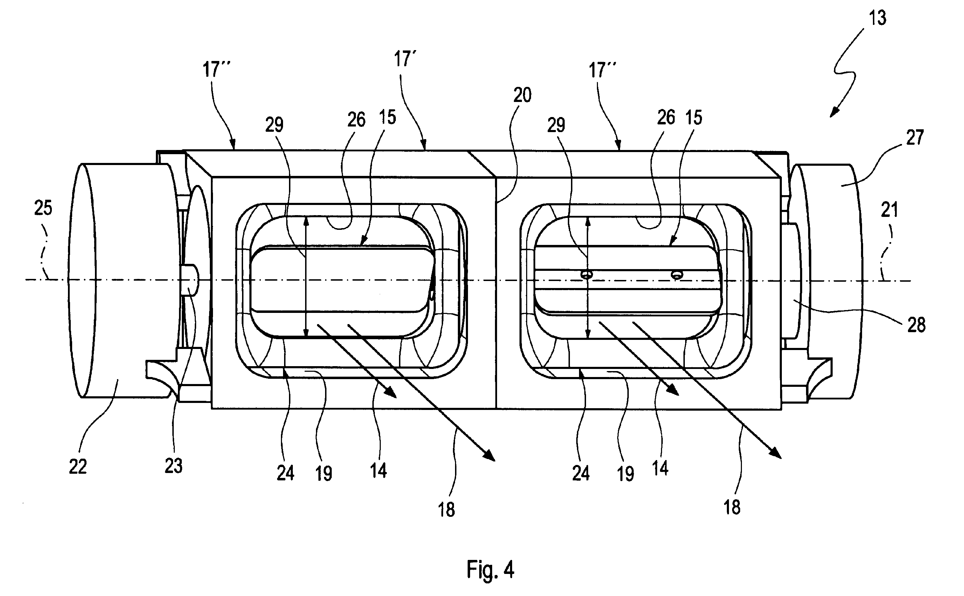

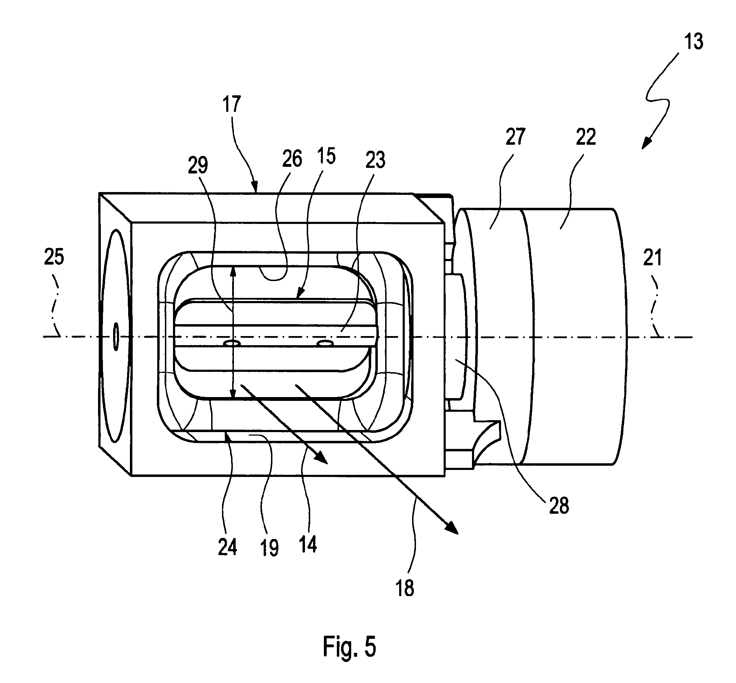

Entsprechend den Fig. 3 bis 5 umfasst eine derartige Ventileinrichtung 13, mit deren Hilfe eine Gasströmung in der Frischluftanlage 6 gesteuert werden kann, ein Gehäuse 17. Dieses Gehäuses 17 umschließt quer zu einer durch einen Pfeil angedeuteten Hauptströmungsrichtung 18 der jeweiligen Gasströmung, hier der Frischluftströmung 14, einen Kanalabschnitt 19, der von der Gasströmung 14 durchströmbar ist. Wie bereits weiter oben zu den Fig. 1 und 2 erläutert, umfasst die Ventileinrichtung 13 zumindest eine Klappe 15. Bei den Ausführungsformen der Fig. 3 und 5 weist die Ventileinrichtung 13 jeweils genau eine Klappe 15 auf. Im Unterschied dazu ist in Fig. 4 eine Ausführungsform dargestellt, bei welcher die Ventileinrichtung 13 zwei derartige Klappen 15 aufweist. Bei dieser Ausführungsform sind auch zwei jeweils von einer Gasströmung 14 separat durchströmbare Kanalabschnitte 19 vorgesehen, die von einem gemeinsamen Gehäuse 17' umschlossen sind. Dabei kann dieses gemeinsame Gehäuse 17' aus zwei Teilgehäusen 17" zusammengebaut sein, beispielsweise entlang einer Trennebene 20.

Die jeweilige Klappe 15 ist im zugehörigen Kanalabschnitt 19 um eine Rotationsachse 21 drehbar angeordnet. Die Rotationsachse 21 erstreckt sich dabei quer zur Hauptströmungsrichtung 18. Die Ventileinrichtung 13 weist einen Klappenantrieb 22 auf, mit dessen Hilfe die jeweilige Klappe 15 rotierend angetrieben werden kann. Der Klappenantrieb 22 treibt hierzu eine Klappenwelle 23 an, die drehfest mit der jeweiligen Klappe 15 verbunden ist. Bei der in Fig. 4 gezeigten Ausführungsform ist für beide Klappen 15 ein gemeinsamer Klappenantrieb 22 vorgesehen. Beide Klappen 15 sind mit der gleichen Klappenwelle 23 drehfest verbunden.

Die Ventileinrichtung 13 weist außerdem zumindest einen Drehrahmen 24 auf. Dieser ist im zugehörigen Kanalabschnitt 19 um eine Drehachse 25 drehbar angeordnet. Die Drehachse 25 erstreckt sich dabei koaxial zur Rotationsachse 21, das heißt, die Rotationsachse 21 und die Drehachse 25 fallen zusammen. Der jeweilige Drehrahmen 24 weist eine Rahmenöffnung 26 auf. Im Beispiel der Fig. 4 sind zwei derartige Drehrahmen 24 vorgesehen, die jeweils in einem der Kanalabschnitte 19 angeordnet sind.

Zum Drehverstellen des jeweiligen Drehrahmens 24 weist die Ventileinrichtung 13 einen Rahmenantrieb 27 auf. Für die Antriebskopplung zwischen dem Rahmenantrieb 27 und dem jeweiligen Drehrahmen 24 ist eine Rahmenwelle 28 vorgesehen, die drehfest mit dem Drehrahmen 24 verbunden ist. Bei der in Fig. 4 gezeigten Ausführungsform sind beide Drehrahmen 24 drehfest mit der Rahmenwelle 28 verbunden. Beispielsweise kann hierzu der in Fig. 4 rechts dargestellte, nahe am Rahmenantrieb 27 angeordnete Drehrahmen 24 direkt mit der Rahmenwelle 28 verbunden sein, während der in Fig. 4 links gezeigte Drehrahmen 24, der vom Rahmenantrieb 27 entfernt ist, über eine hohle Zwischenwelle drehfest mit dem nah am Rahmenantrieb 27 angeordneten Drehrahmen 24 verbunden sein kann. Die Klappenwelle 23 kann dann zwischen den beiden Klappen 15 koaxial durch die hohle Zwischenwelle hindurchgeführt sein. Die hohle Zwischenwelle ist in Fig. 4 nicht erkennbar.

Die jeweilige Klappe 15 ist im zugehörigen Drehrahmen 24 angeordnet, und zwar derart, dass sie einen durchströmbaren Querschnitt 29 der Rahmenöffnung 26 steuern kann. Mit anderen Worten, je nach relativer Drehlage zwischen Klappe 15 und zugehörigem Drehrahmen 24 kann der durchströmbare Querschnitt 29 durch die Klappe 15 gesperrt oder geöffnet sein. In der jeweiligen Sperrstellung kann radial zwischen der Klappe 15 und dem Drehrahmen 24 ein Spalt vorhanden sein, der insbesondere als Drosseldichtspalt ausgestaltet sein kann und eine hinreichende Dichtungswirkung bzw. Sperrwirkung realisiert.

Entsprechend den Fig. 3 bis 5 ist der Klappenantrieb 22 außen am Gehäuse 17 angeordnet und drehfest am Gehäuse 17 abgestützt. Diese Drehabstützung zwischen Klappenantrieb 22 und Gehäuse 17 bzw. 17' bzw. 17" erfolgt bei den Ausführungsformen der Fig. 3 und 4 direkt, während sie bei der in Fig. 5 gezeigten Ausführungsform indirekt erfolgt. Der Rahmenantrieb 27 ist außen am Gehäuse 17 angeordnet und außerdem am Gehäuse 17 drehfest abgestützt. Die drehfeste Abstützung zwischen dem Rahmenantrieb 27 und dem Gehäuse 17 bzw. 17' bzw. 17" erfolgt bei den Ausführungsformen der Fig. 3 bis 5 direkt. Bei den Ausführungsformen der Fig. 3 und 4 sind die beiden Antriebe 22, 27 an voneinander abgewandten Seiten des Gehäuses 17 bzw. 17' angeordnet. Im Unterschied dazu zeigt Fig. 5 eine Ausführungsform, bei welcher die beiden Antriebe 22, 27 an der gleichen Seite des Gehäuses 17 angeordnet sind. Um dies zu realisieren, ist die Rahmenwelle 28 als Hohlwelle ausgestaltet, so dass die Klappenwelle 23 koaxial durch die Rahmenwelle 28 hindurchgeführt werden kann. Gleichzeitig erstreckt sich die Klappenwelle 23 hierbei auch koaxial durch den Rahmenantrieb 27 hindurch. Der Klappenantrieb 22 ist bei dieser Ausführungsform am Rahmenantrieb 27 befestigt und somit über den Rahmenantrieb 27 und somit indirekt am Gehäuse 17 drehfest abgestützt.

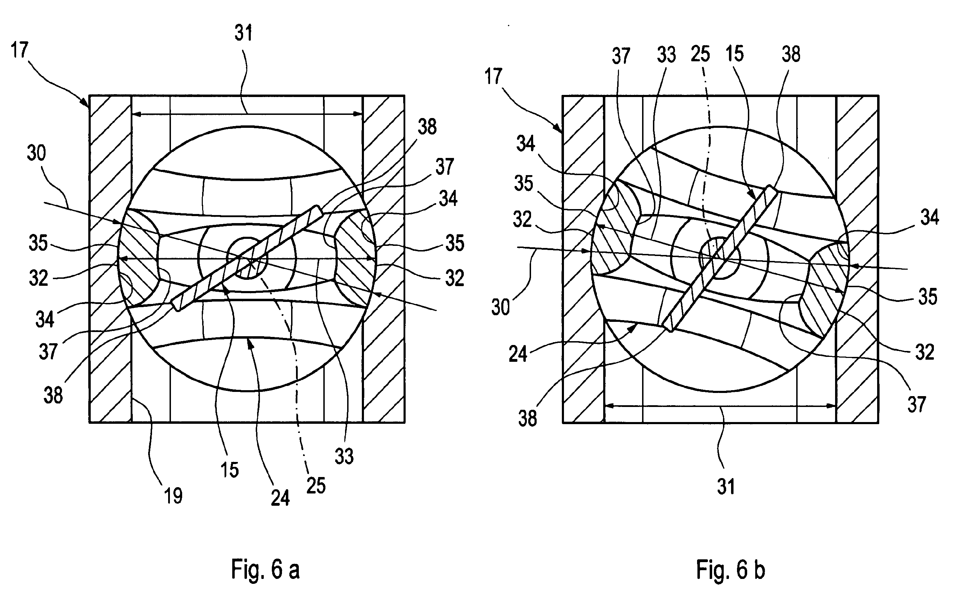

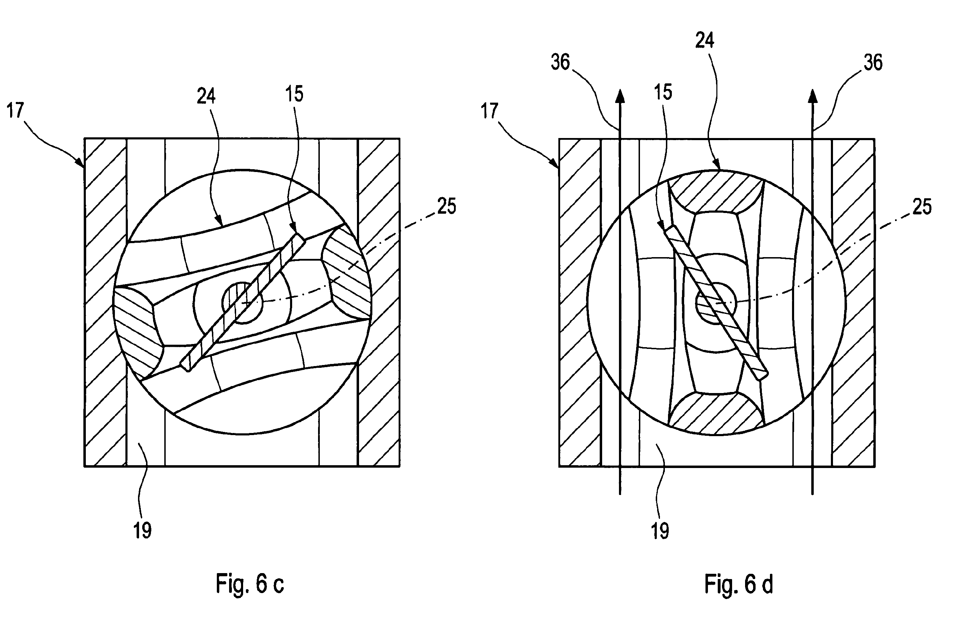

Die Fig. 6a bis 6d zeigen Längsschnitte durch die Ventileinrichtung 13 im Bereich der Klappe 15 bzw. im Bereich einer der Klappen 15. Entsprechend den Fig. 6a bis 6d weist der Drehrahmen 24 einen Außenquerschnitt 30 auf, der größer ist als ein Innenquerschnitt 31, den der Kanalabschnitt 19 vor oder nach, also stromauf oder stromab des Drehrahmens 24 aufweist. Das Gehäuse 17, bei dem es sich grundsätzlich auch um das Gesamtgehäuse 17' bzw. um eines der Teilgehäuse 17" handeln kann, weist an seiner den Kanalabschnitt 19 begrenzenden Innenseite zwei Aussparungen 32 auf, die einander diametral gegenüberliegen.
Ein Innenquerschnitt 33 dieser Aussparungen 32 ist an den Außenquerschnitt 30 des Drehrahmens 24 so angepasst, dass der Drehrahmen 24 in die Aussparungen 32 eindrehen bzw. eintauchen kann. Des Weiteren sind eine Innenkontur 34 der Aussparungen 32 und eine Außenkontur 35 des
Drehrahmens 24 so aufeinander abgestimmt, dass sie dichtend zusammenwirken, solange sie sich zumindest teilweise radial gegenüberliegen, was in den Fig. 6a bis 6c der Fall ist. Solange sich die Innenkontur 34 und die Außenkontur 35 zumindest teilweise radial gegenüberliegen und somit dichtend zusammenwirken, befindet sich der Drehrahmen 24 in einem Überlappungswinkelbereich, der alle relativen Drehlagen zwischen Drehrahmen 24 und Gehäuse 17 beinhaltet, in denen das dichte Zusammenwirken der Innenkontur 34 und der Außenkontur 35 stattfinden kann. Solange sich der Drehrahmen 24 innerhalb dieses Überlappungswinkelbereichs befindet, erfolgt keine Bypassströmung, die den Drehrahmen 24 außerhalb seiner Rahmenöffnung 26 umgeht. Eine derartige Bypassströmung ist in Fig. 6 durch Pfeile 36 angedeutet. In der in Fig. 6d wiedergegebenen Relativlage zwischen Drehrahmen 24 und Gehäuse 17 befindet sich der Drehrahmen 24 in einer Notstellung, die eine Umströmung des Drehrahmens 24 mit möglichst geringem Strömungswiderstand ermöglicht. Diese Notstellung ist gegenüber einer in Fig. 6a wiedergegebenen Ausgangsstellung um 90° verdreht. In dieser Ausgangsstellung erstreckt sich eine hier nicht dargestellte Ebene, in welcher der Drehrahmen 24 seine Rahmenöffnung 26 umschließt, senkrecht zur Hauptströmungsrichtung 18, die einer Axialrichtung des Kanalabschnitts 19 entspricht.

Der zuvor genannte Überlappungswinkelbereich kann einen Drehwinkelbereich von maximal 80° oder von maximal 60° umfassen. Fig. 6b zeigt einen Zustand, bei welcher der Drehrahmen 24 um etwa 15° in der einen Richtung aus der Ausgangslage gemäß Fig. 6a herausgedreht ist. Im Unterschied dazu zeigt Fig. 6c einen Zustand, bei dem der Drehrahmen 24 in der Gegenrichtung um etwa 15° aus der Ausgangsstellung gemäß Fig. 6a herausgedreht ist. In beiden Fällen befindet sich der Drehrahmen 24 noch deutlich innerhalb des Überlappungswinkelbereichs.

Entsprechend den Fig. 6a bis 6d kann die Innenkontur 34 der Aussparungen zweckmäßig zylindersegmentförmig ausgestaltet sein. Korrespondierend dazu kann die Außenkontur 35 des Drehrahmens 24 zweckmäßig zylindersegmentförmig ausgestaltet sein. Ferner ist es vorteilhaft, den Überlappungswinkelbereich symmetrisch zur Ausgangsstellung gemäß Fig. 6a auszugestalten. Auf diese Weise kann der Drehrahmen 24 in beiden Drehrichtungen gleichweit verstellt werden, ohne den Überlappungswinkelbereich zu verlassen.

Eine Innenkontur 37 des Drehrahmens 24 kann auf eine Außenkontur 38 der Klappe 15 so abgestimmt sein, dass sie dichtend zusammenwirken, um die genannte Sperrwirkung für die Schließstellung der Klappe 15 realisieren zu können. Ein dichtendes Zusammenwirken zwischen Innenkontur 37 und Außenkontur 38 ist jedoch nur solange möglich, wie sich die Klappe 15 innerhalb eines Schließwinkelbereichs befindet, der bei Drehlagen zwischen Klappe 15 und Drehrahmen 24 vorliegt, bei denen sich die Innenkontur 37 und die Außenkontur 38 zumindest teilweise radial gegenüberliegen. Wie bereits weiter oben genannt, kann innerhalb dieses Schließwinkelbereichs ein Spalt, insbesondere ein Drosseldichtspalt, zwischen der Innenkontur 37 und der Außenkontur 38 verbleiben. Der genannte Schließwinkelbereich kann beispielsweise einen Drehwinkelbereich von maximal 40° oder von maximal 30° umfassen. Insbesondere kann der Schließwinkelbereich etwa halb so groß sein wie der zuvor genannte Überlappungswinkelbereich.

Entsprechend den Fig. 1 und 2 kann die Ventileinrichtung 13 außerdem eine Steuerung 39 aufweisen, die zumindest mit dem jeweiligen Rahmenantrieb 27 gekoppelt ist, um diesen zu betätigen, also zum Drehverstellen des Drehrahmens 24 anzusteuern. Der Rahmenantrieb 27 ist beispielsweise ein Elektromotor. Beim Klappenantrieb 22 kann es sich grundsätzlich ebenfalls um einen Elektromotor handeln, der grundsätzlich ebenfalls über die Steuerung 39 betrieben werden kann. Alternativ ist es für den Klappenantrieb 22 ebenso möglich, diesen durch eine mechanische Kopplung mit einer von der Brennkraftmaschine 2 drehend angetriebenen Welle zu bilden. Beispielsweise kann eine Nockenwelle oder eine Kurbelwelle dazu verwendet werden, die jeweilige Klappe 15 synchron zur Drehzahl der Kurbelwelle anzutreiben. Der Klappenantrieb 22 kann beispielsweise durch einen Riementrieb oder durch einen Zahnradtrieb oder durch einen Kettentrieb realisiert werden. Durch die direkte oder indirekte mechanische Kopplung der wenigstens einen Klappe 15 mit der Kurbelwelle der Brennkraftmaschine 2 erfolgt für alle Drehzahlen der Kurbelwelle eine zwangsläufige Synchronisation der Klappendrehzahl.

Der Rahmenantrieb 27 kann nun so ausgestaltet sein, dass er den Drehrahmen 24 ausschließlich zwischen der in Fig. 6a gezeigten Ausgangsstellung und der in Fig. 6d gezeigten Notstellung verstellen kann. Optional kann der Rahmenantrieb 27 auch so ausgestaltet sein, dass er zusätzlich zu den beiden genannten Stellungen, nämlich der Ausgangsstellung und der Notstellung weitere Stellungen realisieren kann, wie sie bspw. in den Fig. 6b und 6c dargestellt sind. Außerdem sind grundsätzlich beliebige weitere Stellungen denkbar. Auf diese weiteren Stellungen wird weiter unten näher eingegangen werden.

In der Ausgangsstellung gemäß Fig. 6a ist der durchströmbare Querschnitt des Kanalabschnitts 19 ausschließlich durch die Rahmenöffnung 26 gebildet. Der durchströmbare Querschnitt des Kanalabschnitts 19 ist dann mit Hilfe der Klappe 15 steuerbar, die hierzu mit der Rahmenöffnung 26 zusammenwirkt. In der Notstellung gemäß Fig. 6d umfasst der durchströmbare Querschnitt des Kanalabschnitts 19 zumindest einen Bypasspfad 36, der den Drehrahmen 24 umgeht. Im gezeigten bevorzugten Beispiel sind in der Notstellung zwei derartige Bypasspfade 36 geöffnet, die parallel durchströmbar sind und die den Drehrahmen 24 beiderseits der Drehachse 25 umgehen. Außerdem zeigen die Fig. 6a und 6d, dass der Drehrahmen 24 in der Notstellung um 90° gegenüber der Ausgangsstellung verdreht ist. Der Winkel zwischen Notstellung und Ausgangsstellung liegt vorzugsweise in einem Bereich von 80° bis 100°, jeweils, einschließlich.

Wie bereits weiter oben erläutert, wirkt der Drehrahmen 24 in der Ausgangsstellung 6a - wie auch in den davon abweichenden, ebenfalls in den Überlappungswinkelbereich fallenden Drehstellungen der Fig. 6b und 6c - mit seiner Außenkontur 35 mit der Innenkontur 34 des Kanalabschnitts 19 bzw. der Aussparungen 32 dichtend zusammen, so dass in der Ausgangsstellung (und im übrigen Überlappungswinkelbereich) die Bypasspfade 36 verschlossen sind.

Die Steuerung 39 kann nun entsprechend einer vorteilhaften Verwendung der hier vorgestellten Ventileinrichtung 13 so ausgestaltet bzw. so programmiert sein, dass sie das nachfolgend näher erläuterte Betriebsverfahren realisieren kann.

Der Klappenantrieb 22 treibt die jeweilige Klappe 15 synchron zur Drehzahl der Kurbelwelle rotierend an. Diese Synchronisation ist dabei gezielt so ausgelegt, dass sich für alle Drehzahlbereiche der Kurbelwelle eine im Mittel ausreichende Abgasrückführrate einstellt. Dies gilt insbesondere dann, wenn sich der Drehrahmen 24 in seiner Ausgangsstellung befindet. Wenn nun in Abhängigkeit vorbestimmter Betriebszustände der Brennkraftmaschine 2 die Abgasrückführrate variiert, also erhöht oder erniedrigt werden soll, kann dies durch eine Veränderung eines Schließzeitfensters der Ventileinrichtung 13 realisiert werden. Dieses Schließzeitfenster ist durch einen Schließzeitpunkt, einen Öffnungszeitpunkt und eine Schließzeitdauer, die den zeitlichen Abstand zwischen Schließzeitpunkt und Öffnungszeitpunkt bestimmt, definiert. Der Schließzeitpunkt liegt dann vor, wenn die Klappe 15 in den Schließwinkelbereich eintritt. Der Öffnungszeitpunkt liegt dann vor, wenn die Klappe 15 aus dem Schließwinkelbereich wieder austritt. Das Schließzeitfenster kann mit Hilfe des Rahmenantriebs 27 zeitlich nach früh und spät verschoben werden. Bei invarianter Schließzeitdauer verschieben sich dadurch gleichzeitig auch der Schließzeitpunkt und der Öffnungszeitpunkt nach früh bzw. nach spät. Um den Schließzeitpunkt bzw. das Schließzeitfenster nach früh zu verschieben, betätigt die Steuerung 39 den Rahmenantrieb 27 so, dass dieser den Drehrahmen 24 entgegen der Rotationsrichtung der Klappe 15 um einen einstellbaren Winkel verdreht. Dieser Verdrehwinkel hängt dabei von der Zeitspanne ab, um welche der Schließzeitpunkt bzw. das Schließzeitfenster nach früh verschoben werden soll. Durch die Verdrehung des Drehrahmens 24 entgegen der Rotationsrichtung der Klappe 15 tritt die Klappe 15 zeitlich früher in den Schließwinkelbereich ein als in der Ausgangsstellung. Soll dagegen der Schließzeitpunkt bzw. das Schließzeitfenster nach spät verschoben werden, betätigt die Steuerung 39 den Rahmenantrieb 27 so, dass dieser den Drehrahmen 24 in der Rotationsrichtung der Klappe 15 um einen einstellbaren Winkel verdreht. Dabei hängt auch dieser Verdrehwinkel wieder von der Zeitdauer ab, um welche der Schließzeitpunkt bzw. das Schließzeitfenster nach spät verschoben werden soll. Die dabei einstellbaren Verdrehwinkel zum Verschieben des Schließzeitfensters nach früh bzw. nach spät liegen dabei innerhalb des weiter oben genannten
Überlappungswinkelbereichs. Die Einstellung der Winkel bzw. der Drehlagen zwischen Drehrahmen 24 und Gehäuse 17 können dabei statisch sein und für einen vorbestimmten Zeitraum aufrecht erhalten werden, der vom jeweiligen Betriebszustand der Brennkraftmaschine 2 abhängen kann. Durch die statische Veränderung der Drehlage des Drehrahmens 24 verändert sich die Schließzeitdauer der Ventileinrichtung 13 nicht. Falls es jedoch für bestimmte Betriebszustände der Brennkraftmaschine 2 erforderlich sein sollte, die Schließzeitdauer zu variieren, also zu verlängern oder zu verkürzen, kann dies ebenfalls mit Hilfe des Rahmenantriebs 27 realisiert werden. Solange sich die Klappe 15 im Schließwinkelbereich befindet, kann die Steuerung 39 den Rahmenantrieb 27 so ansteuern, dass sie den Drehrahmen 24 entgegen der Rotationsrichtung der Klappe 15 mit einer einstellbaren Drehgeschwindigkeit verdreht. Durch diese relative Gegendrehung des Drehrahmens 24 bezüglich der Klappe 15 verkürzt sich die Schließzeitdauer der Ventileinrichtung 13. Die Drehgeschwindigkeit des Drehrahmens 24 hängt dabei von dem Wert ab, um den die Schließzeitdauer verkürzt werden soll. Ist jedoch eine Verlängerung der Schließzeitdauer erwünscht, kann die Steuerung 39 solange sich die Klappe 15 im Schließwinkelbereich befindet, den Rahmenantrieb 27 so ansteuern, dass ein den Drehrahmen 24 mit der Rotationsrichtung der Klappe 15 mit einer einstellbaren Drehgeschwindigkeit verdreht. Durch das relative Mitdrehen des Drehrahmens 24 bezüglich der Klappe 15 verlängert sich die Schließzeitdauer entsprechend. Auch hier hängt die Drehgeschwindigkeit des Drehrahmens 24 von dem Wert ab, um den die Schließzeitdauer der Ventileinrichtung 13 verlängert werden soll.

Sobald bei einem derartigen Betrieb zum Verkürzen oder Verlängern der Schließzeitdauer die Klappe 15 den Schließwinkelbereich verlässt, kann die Steuerung 39 den Rahmenantrieb 27 so betätigen, dass der Drehrahmen 24 während dieses vergleichsweise großen Öffnungszeitfensters wieder in seine Ausgangsstellung zurückverstellt wird.

Die Abdichtung eines Spalts zwischen dem Drehrahmen 24 und dem Gehäuse 17 kann beispielsweise mittels beweglicher Dichtleisten realisiert werden, die zum Beispiel im Kanalabschnitt 19 des Gehäuses 17 gleiten können. Ferner könnte eine Dichtwirkung durch Maßnahmen realisiert werden, die zu einer starken Erhöhung des Strömungswiderstands im Spalt führen, sogenannte Oberflächenprofilierungen. Ferner kann eine trennende Abdichtung zwischen dem jeweiligen Gehäuse 17, 17' und einem direkt verbundenen bzw. einem durchgehenden Drehrahmen 24 gemäß Fig. 4 beispielsweise durch kolbenringförmige, hier nicht gezeigte Dichtringe realisiert werden.

Die in Fig. 6d gezeigte Notstellung kann dann eingestellt werden, wenn durch eine entsprechende Fehlermeldung die Ventileinrichtung 13 außer Betrieb bzw. in einen Notlaufbetrieb überführt werden soll. Des Weiteren kann diese Notstellung auch dazu verwendet werden, die Ventileinrichtung 13 zu synchronisieren.

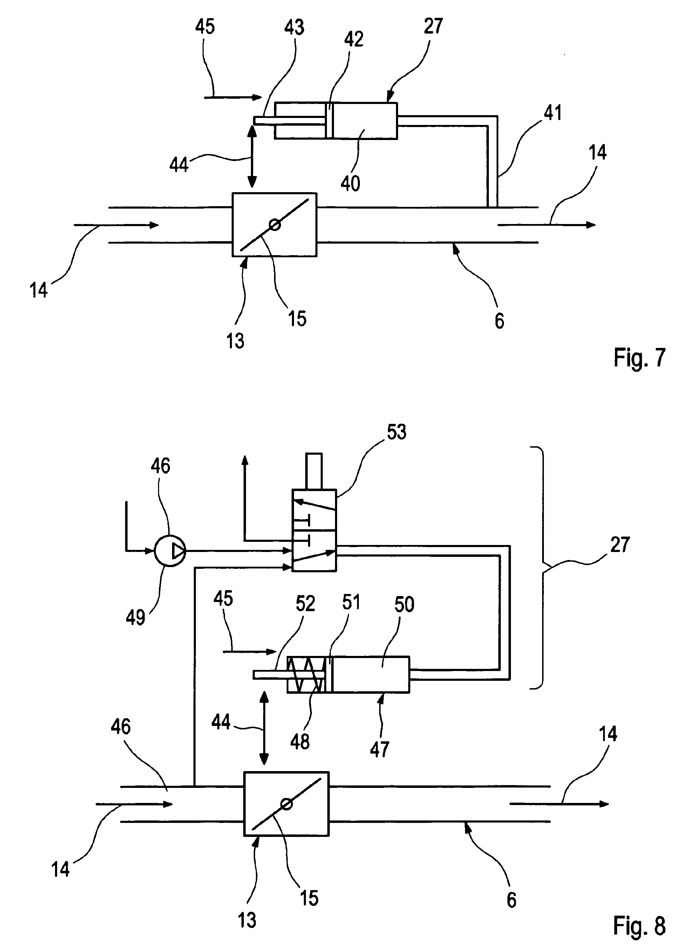

Der Rahmenantrieb 27 kann entsprechend einer bevorzugten Ausführungsform ausfallsicher ausgelegt sein. Das bedeutet, dass er bei einer Fehlfunktion der Klappe 15, die durch die Klappe 15 selbst oder durch den Klappenantrieb 22 verursacht sein kann, den Drehrahmen 24 selbsttätig in die Notstellung überführt. Hierdurch wird eine erhöhte Betriebssicherheit realisiert. In Bezug auf die Fig. 7 bis 10 werden im Folgenden unterschiedliche Ausführungsformen für den Rahmenantrieb 27 näher erläutert, die insbesondere ausfallsicher ausgelegt sind.

Entsprechend Fig. 7 kann der Rahmenantrieb 27 pneumatisch arbeiten. Hierzu kann er bspw. als Kolben-Zylinder-Aggregat ausgestaltet sein, dessen Zylinder 40 bspw. mit der Frischluftanlage 6 kommunizierend verbunden sein kann. Hierzu ist eine pneumatische Verbindungsleitung 41 bezüglich der Frischluftströmung 14 stromab der Klappe 15 an die Frischluftanlage 6 angeschlossen. Ebenso kann der Zylinder 40 stromab der Klappe 15 an den Kanalabschnitt 19 der Ventileinrichtung 13 angeschlossen sein. Ein Kolben 42, der im Zylinder 40 hubverstellbar angeordnet ist, ist über eine Kolbenstange 43 mit dem Drehrahmen 24 antriebsverbunden. Diese Antriebsverbindung ist in Fig. 7 durch einen Doppelpfeil angedeutet und mit 44 bezeichnet. Falls nun stromab der Klappe 15 ein betragsmäßig unzulässig hoher Unterdruck entsteht, bspw. wern die Klappe 15 im Schließwinkelbereich stehen bleibt oder verklemmt, fällt der Druck stromab der Klappe 15 unter einen vorbestimmten Grenzwert. Hierdurch wird der Rahmenantrieb 27 betätigt. Der Unterdruck im Zylinder 40 treibt den Kolben 42 und somit die Kolbenstange 43 entsprechend einem Pfeil 45 an, wodurch über die Antriebskopplung 44 der Drehrahmen 24 in die Notstellung überführt wird.

Entsprechend Fig. 8 kann bei einer anderen Ausführungsform der Rahmenantrieb 27 einen pneumatisch oder hydraulisch arbeitenden Druckerzeuger 46, einen pneumatisch oder hydraulisch arbeitenden Steller 47 sowie eine fremdenergiefrei arbeitende Rückstelleinrichtung 48 aufweisen. Der Steller 47 ist wieder über eine geeignete Antriebskopplung 44 mit dem Drehrahmen 24 antriebsverbunden. Die Rückstelleinrichtung 48, die bspw. durch eine Feder gebildet sein kann, ist mit dem Steller 47 oder direkt mit dem Drehrahmen 24 antriebsgekoppelt. Für den Druckerzeuger 46 sind in Fig. 8 zwei verschiedene Varianten dargestellt. Zum einen kann insbesondere bei einer aufgeladenen Brennkraftmaschine 2 der in der Frischluftanlage 6 stromab der jeweiligen Ladeeinrichtung, z. Bsp. ein Turbolader, herrschende Druck genutzt werden, so dass letztlich die Frischluftanlage 6 selbst den Druckerzeuger 46 bildet. Alternativ kann ein separater Druckerzeuger 46, z. Bsp. in Form einer Pumpe 49 vorgesehen sein, um den gewünschten hydraulischen oder pneumatischen Druck zu erzeugen. Der Steller 47 ist hier exemplarisch wieder als Kolben-Zylinder-Aggregat ausgestaltet und umfasst somit einen Zylinder 50, einen darin verstellbaren Kolben 51, der über eine Kolbenstange 52 über die Wirkverbindung 44 mit dem Drehrahmen 24 gekoppelt ist. Ferner kann der Rahmenantrieb 27 ein Ventil 53 aufweisen, das elektrisch oder pneumatisch oder hydraulisch betätigt werden kann.

In einem Normalbetrieb beaufschlagt der jeweilige Druckerzeuger 46 den Steller 47, insbesondere gesteuert durch das Ventil 53, mit einem Druck, der so gewählt ist, dass der Steller 47 den Drehrahmen 24 entgegen einer Rückstellkraft der Rückstelleinrichtung 48 in die Ausgangsstellung überführt und darin festhält. Kommt es nun zu einem Notbetrieb, entspannt der Druckerzeuger 46 den Steller 47, was bevorzugt über das Ventil 53 gesteuert wird. In der Folge kann die Rückstelleinrichtung 48 ihre Rückstellkraft entfalten, um den Drehrahmen 24 in die Notstellung zu überführen und darin zu halten. Die Verstellbewegung der Kolbenstange 52, die im Notbetrieb den Drehrahmen 24 in die Notstellung überführt, ist in Fig. 8 wieder durch einen Pfeil 45 angedeutet.

Der Rahmenantrieb 27 kann entsprechend den Ausführungsformen der Fig. 3 bis 5 und 9 einen Elektromotor aufweisen. Dieser Elektromotor, der im Folgenden ebenfalls mit 27 bezeichnet sein kann, kann bspw. als bürstenloser Gleichstrommotor ausgestaltet sein. Der Elektromotor 27 kann insbesondere mit einer Positionserfassung ausgestattet sein, sogenannte Kodierung, wodurch der Elektromotor 27 bzw. die zugehörige Steuerung 39 stets die exakte Drehlage des Elektromotors 27 und somit des Drehrahmens 24 kennt. Der Elektromotor 27 kann entsprechend den Fig. 3 bis 5 extern, also außen am Gehäuse 17 angeordnet sein. Die Drehmomentübertragung erfolgt dann über die Rahmenwelle 28.

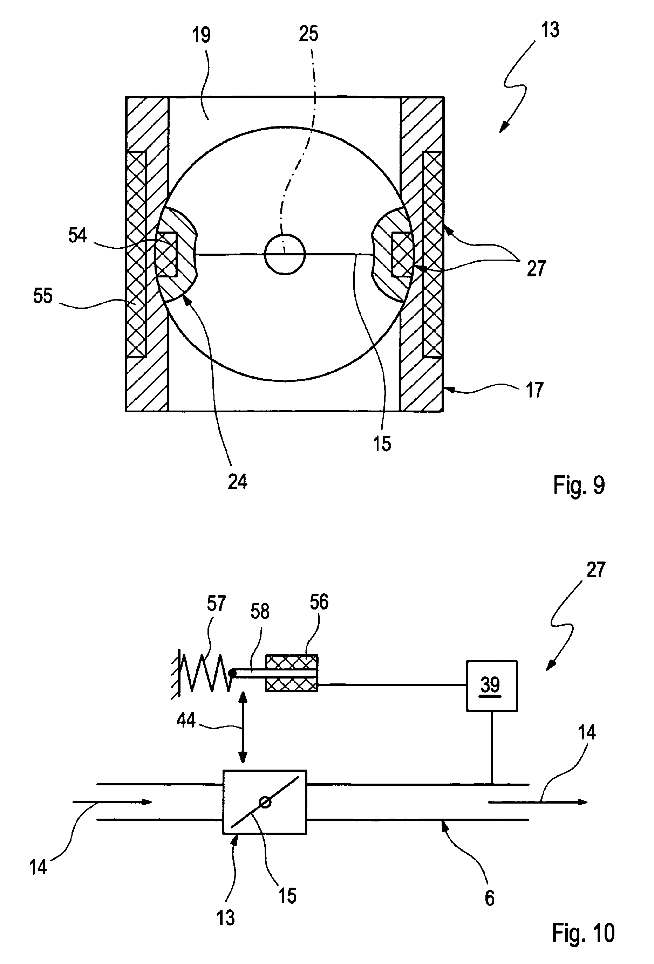

Alternativ kann der Elektromotor 27 gemäß Fig. 9 mehr oder weniger in das Gehäuse 17 integriert sein, wodurch eine besonders kompakte Bauweise realisiert werden kann. Bei der in Fig. 9 gezeigten Ausführungsform ist der Drehrahmen 24 als Rotor des Elektromotors 27 ausgestaltet. Hierzu kann der Drehrahmen 24 insbesondere mit einer Rotorwicklung 54 ausgestattet sein; Das Gehäuse 17 kann als Stator des Elektromotors 27 ausgestaltet sein. Hierzu kann es insbesondere mit einer Statorwicklung 55 ausgestattet sein. Durch eine entsprechende Bestromung der Statorwicklung 55 und/oder der Rotorwicklung 54 ist es möglich, den Drehrahmen-Rotor 24 relativ zum Gehäuse-Stator 17 zu ; verdrehen. Auch bei der in Fig. 9 gezeigten Ausführungsform ist es möglich, den integrierten Elektromotor 27 als bürstenlosen Gleichstrommotor oder als sogenannten Switched-Reluktanzmotor auszugestalten.

Fig. 10 zeigt nun eine Ausführungsform, bei welcher der Rahmenantrieb 27 einen elektromagnetischen Aktuator 56 und eine fremdenergiefrei arbeitende Rückstelleinrichtung 57 aufweist. Die Rückstelleinrichtung 57 kann zweckmäßig durch eine Feder bzw. durch eine Federanordnung gebildet sein. Der Aktuator 56 ist bspw. ein Elektromagnet bzw. ein Solenoid. Der Aktuator 56 ist auf geeignete Weise mit dem Drehrahmen 24 antriebsverbunden. Eine entsprechende Kopplung ist in Fig. 10 wieder durch einen Doppelpfeil 44 angedeutet. Die Rückstelleinrichtung 57 ist entweder mit dem Aktuator 56 oder mit dem Drehrahmen 24 antriebsverbunden. Im Beispiel ist die Rückstelleinrichtung 57 mit einem Stellglied 58 des Aktuators 56 gekoppelt. Im Falle einer Bestromung überführt der Aktuator 56 den Drehrahmen 24 entgegen der Rückstellkraft der Rückstelleinrichtung 57 in die Ausgangsstellung und kann ihn darin festhalten. Der Haltestrom kann dabei gegenüber dem zum Anziehen benötigten Strom reduziert sein. DerAktuator 56 kann ebenfalls von der Steuerung 39 betätigt werden. Falls nun die Bestromung des Aktuators 56 wegfällt oder beendet wird, kann die Rückstelleinrichtung 57 den Drehrahmen 24 in die Notstellung überführen und darin festhalten. Eine derartige Notsituation kann bspw. von der Steuerung 39 über eine entsprechende Sensorik ermittelt werden. Beispielsweise kann die Steuerung 39 den Druck in der Frischluftanlage 6 stromab der Klappe 15 überwachen.

## Patentansprüche

1. Ventileinrichtung zum Steuern einer Gasströmung in einer Frischluftanlage (6) einer Brennkraftmaschine (2), insbesondere eines Kraftfahrzeugs,
- mit einem Gehäuse (17), das mindestens einen von der Gasströmung (14) durchströmbaren Kanalabschnitt (19) quer zur Hauptströmungsrichtung (18) umschließt,
- mit mindestens einer Klappe (15), die im Kanalabschnitt (19) um eine quer zur Hauptströmungsrichtung (18) verlaufende Rotationsachse (21) drehbar ist,
- mit mindestens einem Drehrahmen (24), der im Kanalabschnitt (19) um eine quer zur Hauptströmungsrichtung (18) verlaufende Drehachse (25) drehbar ist und der eine von der Gasströmung (14) durchströmbare Rahmenöffnung (26) aufweist,
- mit einem Rahmenantrieb (27) zum Drehverstellen des Drehrahmens (24),
- wobei die Klappe (15) im Drehrahmen (24) zum Steuern des durchströmbaren Querschnitts der Rahmenöffnung (26) angeordnet ist,
- wobei der Drehrahmen (24) mittels des Rahmenantriebs (27) in eine Ausgangsstellung verstellbar ist, in welcher die Rahmenöffnung (26) den durchströmbaren Querschnitt des Kanalabschnitts (19) bildet,
**dadurch gekennzeichnet,**
**dass** der Drehrahmen (24) mittels des Rahmenantriebs (27) außerdem in eine Notstellung verstellbar ist, in welcher der durchströmbare Querschnitt des Kanalabschnitts (19) zumindest einen den Drehrahmen (24) umgehenden Bypasspfad (36) umfasst.

2. Ventileinrichtung nach Anspruch 1,
**dadurch gekennzeichnet,**
**dass** in der Notstellung zwei parallele Bypasspfade (36) geöffnet sind, die den Drehrahmen (24) beiderseits der Drehachse (25) umgehen.

3. Ventileinrichtung nach Anspruch 1 oder 2,
**dadurch gekennzeichnet,**
**dass** der Drehrahmen (24) in der Notstellung um 90° ± 10° gegenüber der Ausgangsstellung verdreht ist.

4. Ventileinrichtung nach einem der Ansprüche 1 bis 3,
**dadurch gekennzeichnet,**
**das** der Drehrahmen (24) in der Ausgangsstellung (24) mit seiner Außenkontur (35) mit einer Innenkontur (34) des Kanalabschnitts (19) dichtend zusammenwirkt und den wenigstens einen Bypasspfad (36) verschließt.

5. Ventileinrichtung nach einem der Ansprüche 1 bis 4,
**dadurch gekennzeichnet,**
**dass** der Rahmenantrieb (27) ausfallsicher ausgelegt ist, so dass er bei einer Fehlfunktion der Klappe (15) selbsttätig den Drehrahmen (24) in die Notstellung überführt.

6. Ventileinrichtung nach einem der Ansprüche 1 bis 5,
**dadurch gekennzeichnet,**
**dass** der Rahmenantrieb (27) pneumatisch arbeitet und durch einen sich bei geschlossener Klappe (15) und bei in die Ausgangsstellung verstelltem Drehrahmen (24) stromab der Klappe (15) aufbauenden Unterdruck gesteuert ist, insbesondere derart, dass der Rahmenantrieb (27) den Drehrahmen (24) in die Notstellung verdreht, wenn der Unterdruck unter einen vorbestimmten Grenzwert fällt.

7. Ventileinrichtung nach einem der Ansprüche 1 bis 5,
**dadurch gekennzeichnet,**
- **dass** der Rahmenantrieb (27) einen pneumatischen oder hydraulischen Druckerzeuger (46), einen pneumatischen oder hydraulischen Stelle- (47) und eine fremdenergiefrei arbeitende Rückstelleinrichtung (48) umfasst,
- **dass** der Steller (47) mit dem Drehrahmen (24) antriebsverbunden is,
- **dass** die Rückstelleinrichtung (48) mit dem Steller (47) oder mit dem Drehrahmen (24) antriebsgekoppelt ist,
- **dass** der Druckerzeuger (46) im Normalbetrieb, insbesondere ventilgesteuert, den Steller (47) mit Druck beaufschlagt, derart, dass der Steller (47) den Drehrahmen (24) entgegen der Rückstellkraft der Rückstelleinrichtung.(48) in die Ausgangsstellung überführt und darin hält,
- **dass** der Druckerzeuger (46) in einem Notbetrieb, insbesondere ventilgesteuert, den Steller (47) entspannt, derart, dass die Rückstelleinrichtung (48) den Drehrahmen (24) in die Notstellung überfährt und darin hält.

8. Ventileinrichtung nach einem der Ansprüche 1 bis 5,
**dadurch gekennzeichnet,**
- **dass** der Rahmenantrieb (27) einen Elektromotor aufweist,
- wobei insbesondere vorgesehen sein kann, dass der Drehrahmen (24) as Rotor des Elektromotors (27) ausgestaltet ist, wobei der Drehrahmen (24) insbesondere eine Rotorwicklung (54) aufweisen kann, und/oder dass das Gehäuse (17) als Stator des Elektromotors (27) ausgestaltet ist, wobei das Gehäuse (17) insbesondere eine Statorwicklung (55) aufweisen kann.

9. Ventileinrichtung nach einem der Ansprüche 1 bis 5,
**dadurch gekennzeichnet,**
- **dass** der Rahmenantrieb (27) einen elektromagnetischen Aktuator (56) und eine fremdenergiefrei arbeitende Rückstelleinrichtung (57) aufweist,
- **dass** der Aktuator (56) mit dem Drehrahmen (24) antriebsverbunden ist,
- **dass** die Rückstelleinrichtung (57) mit dem Aktuator (56) oder mit dem Drehrahmen (24) antriebsverbunden ist,
- **dass** der Aktuator (56) bei seiner Bestromung den Drehrahmen (24) entgegen einer Rückstellkraft der Rückstelleinrichtung (57) in die Ausgangsstellung überführt und darin hält,
- **dass** die Rückstelleinrichtung (57) bei Entfall der Bestromung des Aktuators (56) den Drehrahmen (24) in die Notstellung überführt und darin hält.

10. Ventileinrichtung nach einem der Ansprüche 1 bis 9,
**dadurch gekennzeichnet,**
- **dass** der Drehrahmen (24) relativ zum Kanalabschnitt (19) in einem die Ausgangsstellung beinhaltenden Schließwinkelbereich verdrehbar ist, in dem der Bypasspfad (36) verschlossen ist,
- wobei insbesondere vorgesehen sein kann, dass der Schließwinkelbereich maximal 80° oder maximal 60° beträgt.

11. Ventileinrichtung nach Anspruch 10,
**dadurch gekennzeichnet,**
- **dass** zur Realisierung des Schließwinkelbereichs des Drehrahmens (24) eine zylindersegmentförmige Außenkontur (35) des Drehrahmens (24) mit einer dazu komplementären zylindersegmentförmigen Innenkontur (34) des Kanalabschnitts (19) zusammenwirkt,
- wobei insbesondere vorgesehen sein kann, dass der Kanalabschnitt (19) zwei diametral gegenüberliegende, die Innenkontur (34) aufweisende Aussparungen (32) aufweist.

12. Ventileinrichtung nach einem der Ansprüche 1 bis 11,
**dadurch gekennzeichnet,**
- **dass** die Klappe (15) relativ zum Drehrahmen (24) in einem Schließwinkelbereich verdrehbar ist, in dem die Klappe (15) die Rahmenöffnung (26) verschließt,
- wobei insbesondere vorgesehen sein kann, dass der Schließwinkebereich maximal 40° oder maximal 30° beträgt.

13. Ventileinrichtung nach Anspruch 12,
**dadurch gekennzeichnet,**
**dass** zur Realisierung des Schließwinkelbereichs der Klappe (15) eine Außenkontur (38) der Klappe (15) mit einer zylindersegmentförmigen Innenkontur (37) des Drehrahmens (24) zusammenwirkt.

14. Brennkraftmaschinensystem für ein Kraftfahrzeug,
- mit einer mehrere Zylinder (3) und darin hubverstellbare Kolben (4) aufweisenden Brennkraftmaschine (2),
- mit einer Frischluftanlage (6) zum Zuführen von Frischluft zu den Zylindern (3) der Brennkraftmaschine (2),
- mit einer Abgasanlage (7) zum Abführen von Abgas von den Zylindern (3) der Brennkraftmaschine (2),
- mit einer Abgasrückführanlage (8) zum Rückführen von Abgas von der Abgasanlage (8) zur Frischluftanlage (7),
- mit mindestens einer Ventileinrichtung (13) nach einem der Ansprüche 1 bis 13, die bezüglich der Frischluftströmung (14) in der Frischluftanlage (6) stromauf von Einlassventilen der Zylinder (3) angeordnet ist und die zun Verändern einer Abgasrückführrate betrieben wird.

## Claims

1. Valve device for controlling a gas flow in a fresh air system (6) of an internal combustion engine (2), in particular a motor vehicle,
- with a housing (17) which encloses at least one duct section (19), through which the gas flow (14) can pass, transversely with respect to the main flow direction (18),
- with at least one flap (15) which can be rotated about an axis of rotation (21) which runs transversely to the main flow direction (18) in the duct section (19),
- with at least one rotary frame (24) which can be rotated about an axis of rotation (25) which runs transversely with respect to the main flow direction (18) in the duct section (19) and has a frame opening (26) through which the gas flow (14) can pass,
- with a frame drive (27) for moving the rotary frame (24) in a rotary manner,
- wherein the flap (15) is arranged in the rotary frame (24) for controlling the cross section through which flow can pass of the frame opening (26),
- wherein the rotary frame (24) can be moved by means of the frame drive (27) into a starting position, in which the frame opening (26) forms the cross section through which flow can pass of the duct section (19),
**characterised in that** the rotary frame (24) additionally can be moved by means of the frame drive (27) into an emergency position, in which the cross section through which flow can pass of the duct section (19) comprises at least one bypass path (36) which circumvents the rotary frame (24).

2. Valve device according to Claim 1,
**characterised in that**
in the emergency position two parallel bypass paths (36) are opened, which circumvent the rotary frame (24) on both sides of the axis of rotation (25).

3. Valve device according to Claim 1 or 2,
**characterised in that**
the rotary frame (24) in the emergency position is rotated by 90° ± 10° compared to the starting position.

4. Valve device according to one of Claims 1 to 3,
**characterised in that**
the outer contour (35) of the rotary frame (24) in the starting position (24) interacts in a sealing manner with an inner contour (34) of the duct section (19) and closes the at least one bypass path (36).

5. Valve device according to one of Claims 1 to 4,
**characterised in that**
the frame drive (27) is designed to be fail-safe so that it automatically transfers the rotary frame (24) into the emergency position in the event of a malfunction of the flap (15).

6. Valve device according to one of Claims 1 to 5,
**characterised in that**
the frame drive (27) operates pneumatically and is controlled by a vacuum which builds up downstream of the flap (15) when the flap (15) is closed and the rotary frame (24) is shifted into the starting position, in particular in such a manner that the frame drive (27) moves the rotary frame (24) into the emergency position if the vacuum falls below a predefined limit value.

7. Valve device according to one of Claims 1 to 5,
**characterised in that**
- the frame drive (27) comprises a pneumatic or hydraulic pressure generator (46), a pneumatic or hydraulic actuator (47) and a restoring device (48) which operates without an external energy source,
- the actuator (47) is drive-connected to the rotary frame (24),
- the restoring device (48) is drive-coupled to the actuator (47) or to the rotary frame (24),
- during normal operation the pressure generator (46) loads the actuator (47) with pressure, in particular in a valve-controlled manner, in such a manner that the actuator (47) transfers the rotary frame (24) into the starting position counter to the restoring force of the restoring device (48) and holds it there,
- during emergency operation the pressure generator (46) releases the actuator (47) in particular in a valve-controlled manner, in such a manner that the restoring device (48) transfers the rotary frame (24) into the emergency position and holds it there.

8. Valve device according to one of Claims 1 to 5,
**characterised in that**
- that the frame drive (27) has an electric motor,
- wherein in particular can be provided, that
- the rotary frame (24) is configured as a rotor of the electric motor (27), wherein the rotary frame (24) can in particular have a rotor winding (54), and/or that
- the housing (17) is configured as a stator of the electric motor (27), wherein the housing (17) can in particular have a stator winding (55).

9. Valve device according to one of Claims 1 to 5,
**characterised in that**
- the frame drive (27) has an electromagnetic actuator (56) and a restoring device (57) which operates without an external energy source,
- the actuator (56) is drive-connected to the rotary frame (24),
- the restoring device (57) is drive-connected to the actuator (56) or to the rotary frame (24),
- when supplied with current the actuator (56) transfers the rotary frame (24) into the starting position counter to a restoring force of the restoring device (57) and holds it there,
- when the current supply to the actuator (56) stops, the restoring device (57) transfers the rotary frame (24) into the emergency position and holds it there.

10. Valve device according to one of Claims 1 to 9,
**characterised in**
- **that** the rotary frame (24) is rotatable with respect to the duct section (19) within a closing angle region, said closing angle region comprising the starting position,
- wherein a particular can be provided, that the closing angle region comprises a maximum of 80° or a maximum of 60°.

11. Valve device according to claim 10,
**characterised in**
- **that** the rotary frame (24) has an outer contour (35) configured in a cylindrical segment shape and cooperating with an inner contour (34) of the duct section (19) to establish said closing angle region, said inner contour (34) is configured complementary to said outer contour (35) in a cylindrical segment shape,
- wherein in particular can be provided, that the duct section (19) comprises two diametrally opposing cut-outs (32) comprising said inner contour (34).

12. Valve device according to one of claims 1 to 11,
**characterised in**
- wherein the flap (15) is rotatable with respect to the rotary frame (24) within a closing angle region, in which the flap (15) closes said frame opening (26),
- wherein in particular can be provided, that the closing angle region comprises a maximum of 40° or a maximum of 30°.

13. Valve device according to claim 12,
**characterised in**
**that** the flap (15) has an outer contour (38) cooperating with an inner contour (37) of the rotary frame (24) to establish said closing angle region, said inner contour (37) is configured in a cylindrical segment shape.

14. Internal combustion engine system for a motor vehicle,
- with an internal combustion engine (2) which has a plurality of cylinders (3) and pistons (4) which can be moved in a stroke-like manner therein,
- with a fresh air system (6) for supplying fresh air to the cylinders (3) of the internal combustion engine (2),
- with an exhaust gas system (7) for discharging exhaust gas from the cylinders (3) of the internal combustion engine (2),
- with an exhaust gas recirculation system (8) for recirculating exhaust gas from the exhaust gas system (8) to the fresh air system (7),
- with at least one valve device (13) according to one of Claims 1 to 13, which is arranged upstream of inlet valves of the cylinders (3) with respect to the fresh air flow (14) in the fresh air system (6) and is operated to change an exhaust gas recirculation rate.

## Revendications

1. Dispositif de soupape destiné à commander un écoulement de gaz dans une installation d'air frais (6) d'un moteur à combustion interne (2), en particulier d'un véhicule automobile, comprenant
- un boîtier (17), qui entoure au moins un tronçon de canal (19) pouvant être traversé par l'écoulement de gaz (14) transversalement-à la direction d'écoulement principal (18),
- au moins un clapet (15), qui peut tourner dans le tronçon de canal (19) autour d'un axe de rotation (21) agencé transversalement au sens d'écoulement principal (18),
- au moins un cadre rotatif (24), qui peut tourner dans le tronçon de canal (19) autour d'un axe de rotation (25) agencé transversalement au sens d'écoulement principal (18) et qui présente une ouverture de cadre (26) pouvant être traversée par l'écoulement de gaz (14),
- un entraînement de cadre (27) pour le réglage rotatif du cadre rotatif (24),
- le clapet (15) étant disposé dans le cadre rotatif (24) pour la commande de la section pouvant être traversée de l'ouverture de cadre (26),
- le cadre rotatif (24) pouvant être déplacé au moyen de l'entraînement de cadre (27) dans une position de départ, dans laquelle l'ouverture de cadre (26) forme la section pouvant être traversée du tronçon de canal (19),
**caractérisé en ce que**
le cadre rotatif (24) peut être déplacé au moyen de l'entraînement de cadre (27) également dans une position d'urgence, dans laquelle la section pouvant être traversée du tronçon de canal (19) comprend au moins un chemin de dérivation (36) contournant le cadre rotatif (24).

2. Dispositif de soupape selon la revendication 1,
**caractérisé en ce que**
deux chemins de dérivation (36) parallèles, qui contournent le cadre rotatif (24) des deux côtés de l'axe de rotation (25), sont ouverts dans la position d'urgence.

3. Dispositif de soupape selon la revendication 1 ou 2,
**caractérisé en ce que**
le cadre rotatif (24) est tourné dans la position d'urgence de 90° ± 10° par rapport à la position de départ.

4. Dispositif de soupape selon l'une quelconque des revendications 1 à 3,
**caractérisé en ce que**
le cadre rotatif (24) coopère, dans la position de départ (24), avec son contour extérieur (35) de façon étanche avec un contour intérieur (34) du tronçon de canal (19) et ferme le au moins un chemin de dérivation (36).

5. Dispositif de soupape selon l'une quelconque des revendications 1 à 4,
**caractérisé en ce que**
l'entraînement de cadre (27) est conçu à sûreté intégrée, de sorte que, dans le cas d'un dysfonctionnement du clapet (15), il transfère automatiquement le cadre rotatif (24) dans la position d'urgence.

6. Dispositif de soupape selon l'une quelconque des revendications 1 à 5,
**caractérisé en ce que**
l'entraînement de cadre (27) travaille de façon pneumatique et est commandé par une dépression qui s'établit en aval du clapet (15) lorsque le clapet (15) est fermé et lorsque le cadre rotatif (24) est déplacé dans la position de départ, en particulier de telle sorte que l'entraînement de cadre (27) fait tourner le cadre rotatif (24) dans la position d'urgence lorsque la dépression descend au-dessous d'une valeur limite prédéfinie.

7. Dispositif de soupape selon l'une quelconque des revendications 1 à 5,
**caractérisé en ce que**
- l'entraînement de cadre (27) comprend un générateur de pression (46) pneumatique ou hydraulique, un actionneur (47) pneumatique ou hydraulique et un dispositif de rappel (48) travaillant sans énergie extérieure,
- **en ce que** l'actionneur (47) est relié en entraînement au cadre rotatif (24),
- **en ce que** le dispositif de rappel (48) est couplé en entraînement avec l'actionneur (47) ou avec le cadre rotatif (24),
- **en ce que** le générateur de pression (46) sollicite en pression l'actionneur (47) en service normal, en particulier commandé par soupape, de telle sorte que l'actionneur (47) transfère le cadre rotatif (24) dans le sens contraire à la force de rappel du dispositif de rappel (48) dans la position de départ et le maintient dans cette position,
- **en ce que** le générateur de pression (46) détend l'actionneur (47) dans un mode d'urgence, en particulier commandé par soupape, de telle sorte que le dispositif de rappel (48) transfère le cadre rotatif (24) dans la position d'urgence et le maintient dans cette position.

8. Dispositif de soupape selon l'une quelconque des revendications 1 à 5,
**caractérisé en ce que**
- l'entraînement de cadre (27) présente un moteur électrique,
- sachant qu'il peut être prévu en particulier que le cadre rotatif (24) soit conçu comme rotor du moteur électrique (27), le cadre rotatif (24) pouvant présenter en particulier un enroulement de rotor (54), et/ou **en ce que** le boîtier (17) est conçu comme stator du moteur électrique (27), le boîtier (17) pouvant présenter en particulier un enroulement de stator (55).

9. Dispositif de soupape selon l'une quelconque des revendications 1 à 5,
**caractérisé en ce que**
- l'entraînement de cadre (27) présente un actionneur (56) électromagnétique et un dispositif de rappel (57) travaillant sans énergie extérieure,
- **en ce que** l'actionneur (56) est relié en entraînement au cadre rotatif (24),
- **en ce que** le dispositif de rappel (57) est relié en entraînement à l'actionneur (56) ou au cadre rotatif (24),
- **en ce que** l'actionneur (56) transfère, lors de son alimentation en courant, le cadre rotatif (24) dans le sens contraire à une force de rappel du dispositif de rappel (57) dans la position de départ et le maintient dans cette position,
- **en ce que** le dispositif de rappel (57) transfère le cadre rotatif (24) dans la position d'urgence en cas de défaillance de l'alimentation en courant de l'actionneur (56) et le maintient dans cette position.

10. Dispositif de soupape selon l'une quelconque des revendications 1 à 9,
**caractérisé en ce que**
- le cadre rotatif (24) peut tourner par rapport au tronçon de canal (19) dans une plage d'angles de fermeture incluant la position de départ, plage dans laquelle le chemin de dérivation (36) est fermé,
- sachant qu'il peut être prévu en particulier que la plage d'angles de fermeture est d'au maximum 80° ou d'au maximum 60°.

11. Dispositif de soupape selon la revendication 10,
**caractérisé en ce que**,
- pour réaliser la plage d'angles de fermeture du cadre rotatif (24), un contour extérieur (35) en forme de segment de cylindre, du cadre rotatif (24) coopère avec un contour intérieur (34), complémentaire du premier contour et en forme de segment de cylindre, du tronçon de canal (19),
- sachant qu'il peut être prévu en particulier que le tronçon de canal (19) présente deux évidements (32) diamétralement opposés et présentant le contour intérieur (34).

12. Dispositif de soupape selon l'une quelconque des revendications 1 à 11,
**caractérisé en ce que**
- le clapet (15) peut tourner par rapport au cadre rotatif (24) dans une plage d'angles de fermeture, dans laquelle le clapet (15) ferme l'ouverture de cadre (26),
- sachant qu'il peut être prévu en particulier que la plage d'angles de fermeture est d'au maximum 40° ou d'au maximum 30°.

13. Dispositif de soupape selon la revendication 12,
**caractérisé en ce que**,
pour réaliser la plage d'angles de fermeture du clapet (15), un contour extérieur (38) du clapet (15) coopère avec un contour intérieur (37), en forme de segment de cylindre, du cadre rotatif (24).

14. Système de moteur à combustion pour un véhicule automobile, comprenant
- un moteur à combustion interne (2) présentant plusieurs cylindres (3) et des pistons (4) réglables à l'intérieur au niveau de la course,
- une installation d'air frais (6) pour l'arrivée d'air frais aux cylindres (3) du moteur à combustion interne (2),
- une installation de gaz d'échappement (7) pour l'évacuation de gaz d'échappement des cylindres (3) du moteur à combustion interne (2),
- un système de recyclage de gaz d'échappement (8) pour le recyclage de gaz d'échappement de l'installation de gaz d'échappement (8) vers l'installation d'air frais (7),
- au moins un dispositif de soupape (13) selon l'une quelconque des revendications 1 à 13, qui est disposé par rapport à l'écoulement d'air frais (14) dans l'installation d'air frais (6) en amont de soupapes d'entrée des cylindres (3) et qui est utilisé pour faire varier un taux de recyclage de gaz d'échappement.
